# EUROPEAN PATENT SPECIFICATION

(11) **EP 3 326 221 B1**
(45) Date of publication and mention of the grant of the patent: **11.03.2020**
(21) Application number: 15804536.9
(22) Date of filing: 04.12.2015
(51) Int. Cl.: H01M 2/04, H01M 2/26, H01M 10/058

(54) **BATTERY**
AKKUMULATOR
BATTERIE

(30) Priority: 18.09.2015 JP 2015186091
(43) Date of publication of application: 30.05.2018
(73) Proprietor: Robert Bosch GmbH, 70442 Stuttgart (DE); GS Yuasa International Ltd., Kyoto-shi, Kyoto 601-8520 (JP)
(72) Inventor: OGAWA, Masumi, Kyoto Kyoto 601-8520 (JP); KAWATE, Kenji, Kyoto Kyoto 601-8520 (JP)
(74) Representative: Isarpatent
(86) International application number: PCT/EP2015/078628
(87) International publication number: WO 2017/045732

(56) References cited:
- EP-A1- 2 357 686
- EP-A1- 2 482 359
- US-A1- 2013 255 072
- US-A1- 2014 030 587

## Description

### TECHNICAL FIELD

The present invention relates to an energy storage device including an electrode assembly, a current collector, and a case accommodating the electrode assembly and the current collector, as for example known from EP 2 482 359 A1.

### BACKGROUND ART

There has been widely known a conventional configuration of an energy storage device that includes an electrode assembly, a current collector, and a case accommodating the electrode assembly and the current collector. The electrode assembly and the current collector are connected to each other in the case (see Patent Document 1, for example).

### PRIOR ART DOCUMENT

### PATENT DOCUMENT

Patent Document 1: JP-A-2014-179214

### SUMMARY OF THE INVENTION

### PROBLEMS TO BE SOLVED BY THE INVENTION

The energy storage device thus configured may have a vacant space provided with no power generating portion of the electrode assembly in the case. Such a vacant space leads to deterioration in occupancy of the power generating portion in the case, and may inhibit increase in capacity of the energy storage device.

The present invention has been made in view of the problem mentioned above, and an object thereof is to provide an energy storage device increased in capacity by securing large occupancy of a power generating portion of an electrode assembly in a case.

### MEANS FOR SOLVING THE PROBLEMS

In order to achieve the object mentioned above, an energy storage device according to the present invention is defined in claim 1.

As described above, the portion connecting the electrode assembly or the conductive member to the current collector is disposed inside an inner surface of the recess. A power generating portion (a portion other than the portion connected to the current collector) of the electrode assembly can thus occupy close to the inner surface of the case. Accordingly, the power generating portion of the electrode assembly can occupy largely in the case, so as to achieve increase in capacity of the energy storage device.

Optionally, the current collector is in direct contact with an inner surface of the recess, or is in indirect contact with the inner surface of the recess via a member different from the current collector and the case.

As described above, the current collector, which is in direct or indirect contact with the inner surface of the recess, can be disposed closer to the outside of the case. The power generating portion of the electrode assembly can occupy closer to the inner surface of the case, so as to achieve further increase in capacity of the energy storage device.

Optionally, the current collector has a connection portion connected to the electrode assembly or a connection portion connected to the conductive member, and a fastened portion fastened to the case, the connection portion is disposed inside the recess, and the fastened portion is disposed opposite to a portion other than the recess of the case.

The portion connecting the electrode assembly or the conductive member to the current collector projects outward from the remaining portion of the electrode assembly. The connection portion of the current collector is disposed opposite to the recess, so as to secure the space to dispose the portion projecting outward in the case and to inhibit increase in size of the entire case.

The fastened portion of the current collector is disposed opposite to the portion other than the recess of the case, so as to fasten the portion other than the recess of the case and the current collector. The case and the current collector can thus be fastened firmly.

Optionally, the current collector may be formed into a stepped shape such that the connection portion is disposed inside the recess relative to the fastened portion.

The connection portion is disposed inside the recess relative to the fastened portion so as to provide a space to dispose the portion projecting outward in the case (the portion connecting the electrode assembly or the conductive member to the current collector). This configuration inhibits increase in size of the entire case and achieves increase in capacity of the energy storage device.

Optionally, the recess may correspond to a thin portion of the case, which as a thickness smaller than the remaining portion of the case.

As described above, the recess is provided by the thin portion of the case so as to inhibit increase in size of the entire case and to achieve increase in capacity of the energy storage device, in comparison to a case where the recess is provided by swelling outward the case.

Optionally, the thin portion may be provided with a projection.

As described above, the thin portion is provided with the projection so as to secure rigidity of the thin portion, rigidity of which is likely to decrease in comparison to the remaining portion of the case. This configuration secures safety of the energy storage device and achieves increase in capacity of the energy storage device.

As described above, the electrode assembly has the tab so as to achieve reduction in size of the portion connecting the electrode assembly or the conductive member connected to the electrode assembly to the current collector. This configuration achieves reduction in size of the recess provided at the inner surface of the case. Accordingly, the power generating portion of the electrode assembly can occupy largely in the case to achieve increase in capacity of the energy storage device.

Optionally, the electrode assembly includes electrodes that are wound to be layered, the tab is disposed in one of two portions of the electrode assembly divided by a plane that is perpendicular to a layered direction of the electrodes and includes a winding axis of the electrode assembly.

As described above, the tab is disposed in one of the two portions of the electrode assembly divided by the plane including the winding axis, so as to achieve reduction in thickness of the tab. Furthermore, the recess is provided at the inner surface of the case toward which the tab projects, so as to achieve reduction in length of the tab. The power generating portion of the electrode assembly can occupy more in the case. The energy storage device can thus be increased in capacity.

### ADVANTAGES OF THE INVENTION

An energy storage device according to the present invention can be increased in capacity by securing large occupancy of a power generating portion of an electrode assembly in a case.

### BRIEF DESCRIPTION OF THE DRAWINGS

Fig. 1: A perspective view of outer appearance of an energy storage device according to an embodiment.
Fig. 2: An exploded perspective view of the energy storage device according to the embodiment.
Fig. 3: An exploded perspective view of a lid plate structure according to the embodiment.
Fig. 4: A perspective view from below, of a part of the lid plate structure according to the embodiment.
Fig. 5: A perspective view from below, of a lid plate according to the embodiment, accompanied by a sectional view taken along line V-V indicated in this perspective view.
Fig. 6: A perspective view from below, of a lower insulating member according to the embodiment.
Fig. 7: A perspective view from below, of a negative electrode current collector according to the embodiment.
Fig. 8: A perspective view of a configuration of an electrode assembly according to the embodiment.
Fig. 9: A first outlined sectional view of a negative electrode lead plate and its peripheral structure according to the embodiment.
Fig. 10: A second outlined sectional view of the negative electrode lead plate and its peripheral structure according to the embodiment.

### MODE FOR CARRYING OUT THE INVENTION

An energy storage device according to each of embodiments of the present invention will now be described below with reference to the drawings. These drawings are schematic views and do not necessarily show exact configurations.

Embodiments to be described below each specifically exemplify the present invention. Shapes, materials, constituent elements, locations and connection states of the constituent elements, the order of the production steps, and the like to be mentioned in the following embodiments are merely exemplary and will not limit the scope of the present invention. Among the constituent elements according to the following embodiments, those not recited in the independent claim referring to the superordinate concept are to be described as optional constituent elements.

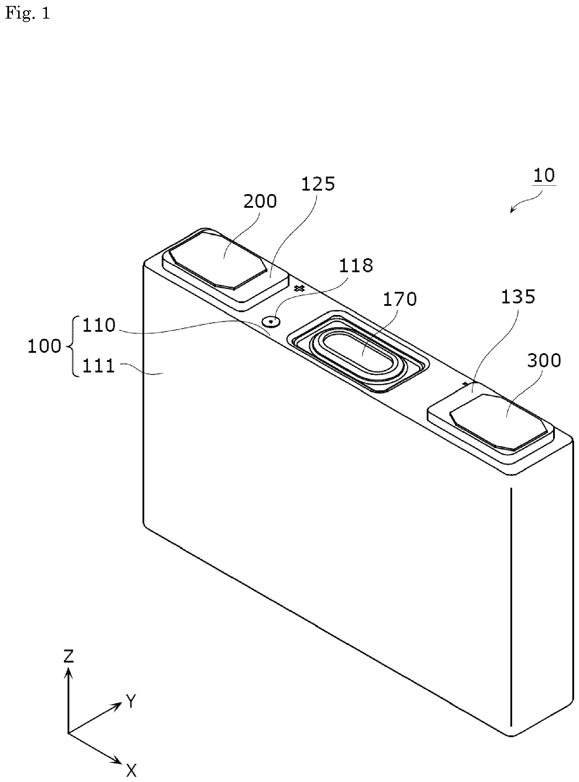

An energy storage device 10 according to an embodiment will be generally described with reference to Figs. 1 to 3.

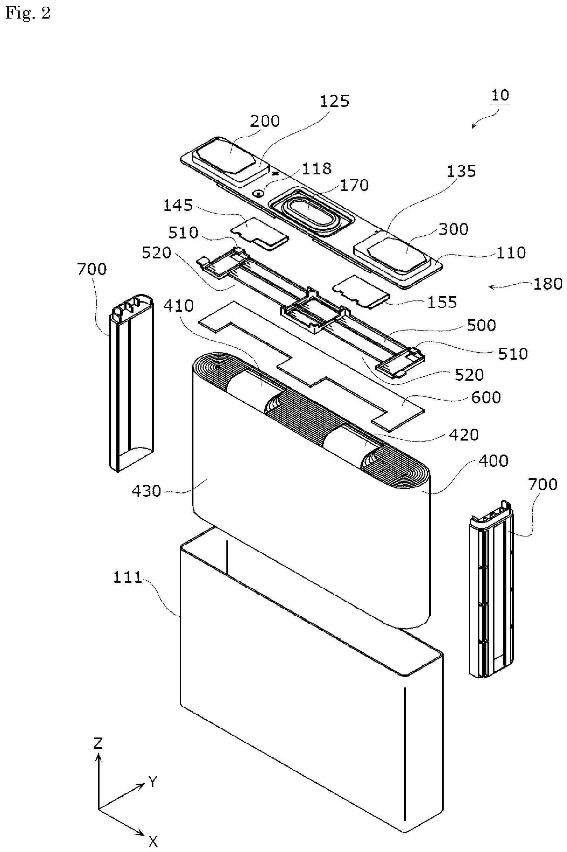

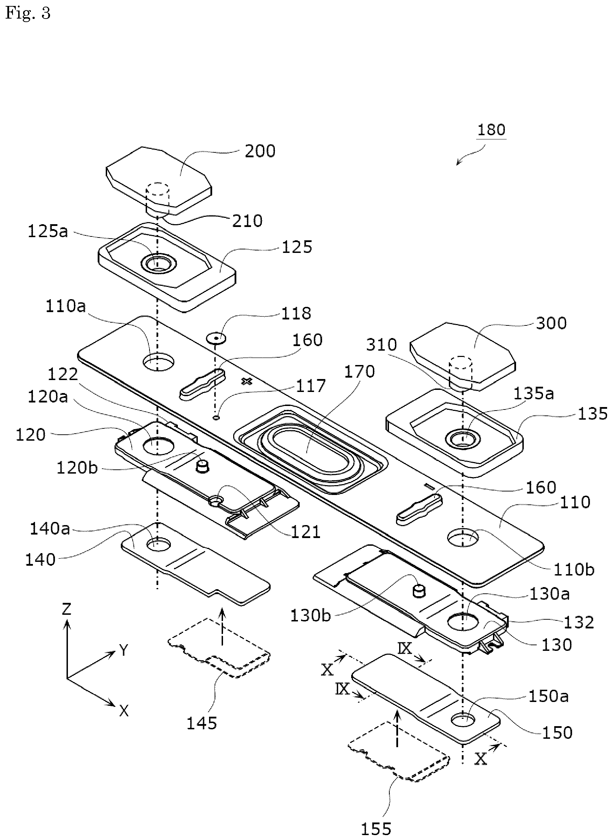

Fig. 1 is a perspective view of outer appearance of the energy storage device 10 according to the embodiment. Fig. 2 is an exploded perspective view of the energy storage device 10 according to the embodiment. Fig. 3 is an exploded perspective view of a lid plate structure 180 according to the embodiment. Fig. 3 shows, with dotted lines, a positive electrode lead plate 145 and a negative electrode lead plate 155 joined to a positive electrode current collector 140 and a negative electrode current collector 150 included in the lid plate structure 180, respectively.

Fig. 1 and subsequent drawings assume that a Z axis direction agrees with the vertical direction for easier description, although the Z axis direction may not always agree with the vertical direction in actual use.

The energy storage device 10 is a secondary battery configured to be charged and discharged electricity, and more specifically is a nonaqueous electrolyte secondary battery such as a lithium ion secondary battery. The energy storage device 10 is applied to an electric vehicle (EV), a hybrid electric vehicle (HEV), a plug-in hybrid electric vehicle (PHEV), or the like. The energy storage device 10 is not limited to the nonaqueous electrolyte secondary battery, but can be a secondary battery other than the nonaqueous electrolyte secondary battery or can be a capacitor.

As shown in Figs. 1 and 2, the energy storage device 10 includes an electrode assembly 400 and a case 100 accommodating the electrode assembly 400. The electrode assembly 400 is provided thereabove with the lid plate structure 180 including a lid plate 110 of the case 100 provided with various elements in the present embodiment.

The lid plate structure 180 includes the lid plate 110 of the case 100, a positive electrode terminal 200, a negative electrode terminal 300, upper insulating members 125 and 135, lower insulating members 120 and 130, the positive electrode current collector 140, and the negative electrode current collector 150.

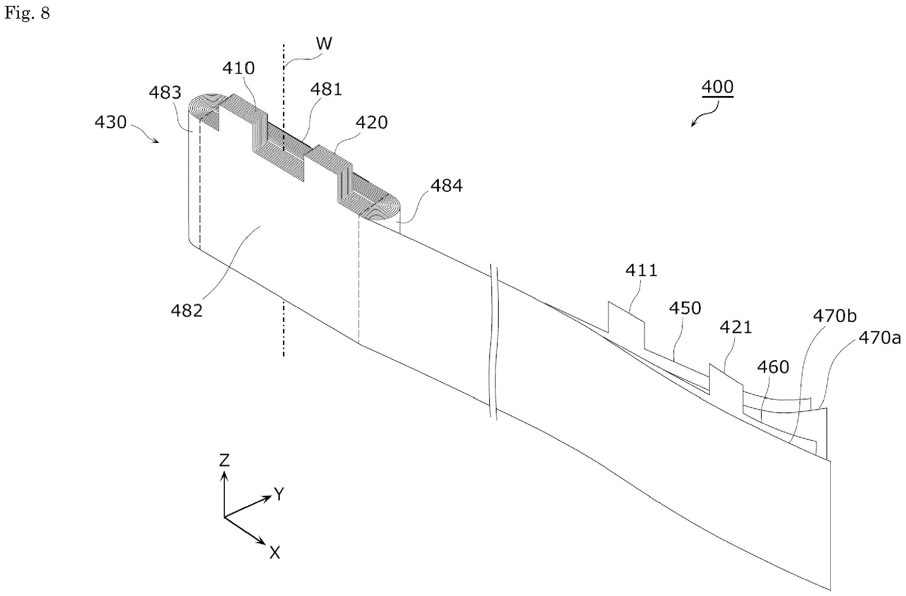

The electrode assembly 400 includes layered electrodes (positive and negative electrodes) and a separator interposed therebetween. In the electrode assembly 400 according to the present embodiment, the electrodes are wound so as to be layered. Specifically, the electrode assembly 400 includes a power generating portion 430 serving as a main body portion of the electrode assembly 400 and tabs 410 and 420 projecting from the power generating portion 430. The tab 410 is for the positive electrode and is electrically connected to the positive electrode terminal 200 whereas the tab 420 is for the negative electrode and is electrically connected to the negative electrode terminal 300. The configuration of the electrode assembly 400 will be described in detail later with reference to Fig. 8.

The positive electrode terminal 200 is electrically connected to the positive electrode of the electrode assembly 400 via the positive electrode current collector 140 whereas the negative electrode terminal 300 is electrically connected to the negative electrode of the electrode assembly 400 via the negative electrode current collector 150. The electrode terminals including the positive electrode terminal 200 electrically connected to the electrode assembly 400 are each insulated from the case 100 by the insulating members including the lower insulating member 120.

Each of the upper insulating members 125 and 135 and the lower insulating members 120 and 130 is disposed at least partially between a wall of the case 100 and corresponding one of the electrode terminals. In the present embodiment, the insulating members are disposed along the lid plate 110 configuring the upper wall out of six walls shaping the case 100 that has a substantially rectangular parallelepiped outer shape.

The energy storage device 10 according to the present embodiment includes, in addition to the configurations mentioned above, an upper spacer 500 and a buffer sheet 600, which are disposed between the lid plate structure 180 and the electrode assembly 400.

The upper spacer 500 is disposed between the electrode assembly 400 and the lid plate 110, more specifically, between a first end of the electrode assembly provided with the tabs 410 and 420 and the lid plate 110. The upper spacer 500 has locked portions 510 locked to part of the lid plate structure 180. In other words, the upper spacer 500 has the locked portions 510 as portions hooked to part of the lid plate structure 180.

Specifically, the entire upper spacer 500 has a tabular shape, and has the two locked portions 510 and two openings 520 allowing the tabs 410 and 420 to be inserted thereto (allowing the tabs 410 and 420 to pass therethrough). The openings 520 according to the present embodiment are provided at the upper spacer 500 as cut-away sections. The upper spacer 500 can be made of an insulating material such as polycarbonate (PC), polypropylene (PP), polyethylene (PE), or polyphenylene sulfide resin (PPS).

The upper spacer 500 serves as a member directly or indirectly regulating upward movement (toward the lid plate 110) of the electrode assembly 400, or a member preventing short circuit between the lid plate structure 180 and the electrode assembly 400, for example. The upper spacer 500 has the two locked portions 510 each of which is locked to an attachment portion 122 or 132 provided at the lid plate structure 180.

The buffer sheet 600 is made of a highly soft porous material such as foamed polyethylene, and serves as a buffer member between the electrode assembly 400 and the upper spacer 500. Similarly to the upper spacer 500, the buffer sheet 600 is provided with openings allowing the tabs 410 and 420 to be inserted thereto (allowing the tabs 410 and 420 to pass therethrough).

In the present embodiment, there is provided a side spacer 700 between each of side surfaces of the electrode assembly 400 (the side surfaces in an X axis direction in the present embodiment) and the inner surface of the case 100. The X axis direction extends in a direction crossing an alignment direction (the Z axis direction) of the electrode assembly 400 and the lid plate 110. The side spacers 700 are provided to regulate the position of the electrode assembly 400, for example. The side spacers 700 can be made of an insulating material such as PC, PP, PE, or PPS, similarly to the upper spacer 500.

In addition to the elements shown in Figs. 1 to 3, the energy storage device 10 can include elements such as an insulating film wrapping the electrode assembly 400, and a buffer sheet provided between the electrode assembly 400 and the bottom surface of the case 100 (a main body 111). The case 100 of the energy storage device 10 encloses an electrolyte solution (a nonaqueous electrolyte) which is not shown in the figures.

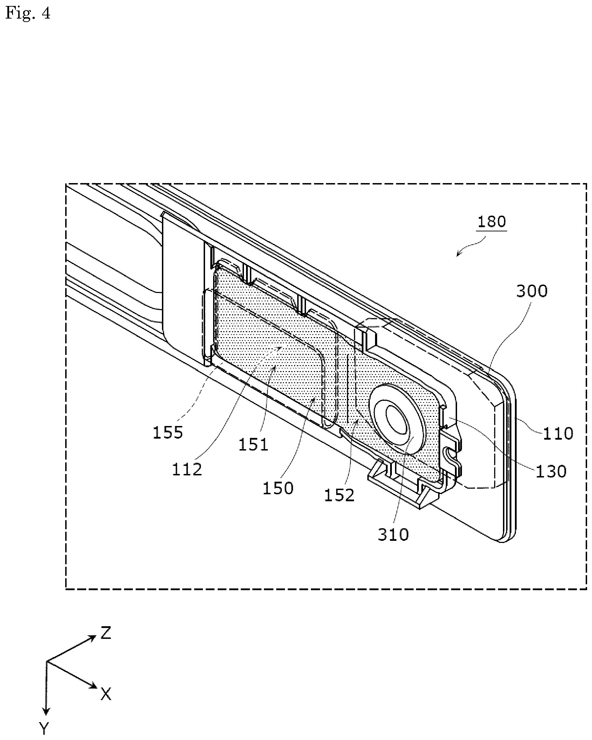

The case 100 includes the main body 111 having a bottomed rectangular cylindrical shape and the lid plate 110 as a plate member closing an opening of the main body 111. The lid plate 110 and the main body 111 are welded after the electrode assembly 400 and the like are accommodated in the case 100 so as to hermetically seal the inner space of the case 100. The lid plate 110 and the main body 111 are not particularly limited in terms of their materials, but are preferably made of weldable metal such as stainless steel, aluminum, or aluminum alloy. The case 100 is provided at the inner surface (the rear surface of the lid plate 110 in the present embodiment) with a recess. In this regard, structures of members such as the lid plate 110 and the current collectors will be described in detail later with reference to Figs. 4 to 7.

As shown in Figs. 2 and 3, the lid plate 110 is provided with a safety valve 170, an electrolyte solution filling port 117, through holes 110a and 110b, and two swelling portions 160 as projections. The safety valve 170 is provided to be opened to discharge gas in the case 100 when internal pressure of the case 100 increases.

The electrolyte solution filling port 117 is a through hole allowing the electrolyte solution to be filled therethrough during production of the energy storage device 10. As shown in Figs. 1 to 3, the lid plate 110 is provided with an electrolyte solution filling plug 118 configured to close the electrolyte solution filling port 117. During production of the energy storage device 10, the electrolyte solution is injected through the electrolyte solution filling port 117 into the case 100 and the electrolyte solution filling plug 118 is welded to the lid plate 110 to close the electrolyte solution filling port 117, so that the electrolyte solution is enclosed in the case 100.

The electrolyte solution enclosed in the case 100 is not particularly limited in terms of its type but can be of any type, unless the electrolyte solution adversely affects performance of the energy storage device 10.

The two swelling portions 160 according to the present embodiment are provided at the lid plate 110 by partially swelling the lid plate 110, and are each used to position the upper insulating member 125 or 135. Each of the swelling portions 160 is provided, at an upper portion of the rear surface (facing the electrode assembly 400), with an engagement recess as a recessed portion (not shown). The engagement recess partially engages with an engaging portion 120b or 130b of the lower insulating member 120 or 130. Accordingly, the lower insulating member 120 or 130 is also positioned and fixed to the lid plate 110 in this state.

The upper insulating member 125 electrically insulates the positive electrode terminal 200 from the lid plate 110 whereas the lower insulating member 120 electrically insulates the positive electrode current collector 140 from the lid plate 110. The upper insulating member 135 electrically insulates the negative electrode terminal 300 from the lid plate 110 whereas the lower insulating member 130 electrically insulates the negative electrode current collector 150 from the lid plate 110. The upper insulating members 125 and 135 can be also referred to as upper gaskets whereas the lower insulating members 120 and 130 can be also referred to as lower gaskets. In other words, the upper insulating members 125 and 135 as well as the lower insulating members 120 and 130 also serve as sealers between the electrode terminals (200 and 300) and the case 100 in the present embodiment.

The upper insulating members 125 and 135 as well as the lower insulating members 120 and 130 are each made of an insulating material such as PC, PP, PE, or PPS, similarly to the upper spacer 500. The lower insulating member 120 is provided, at a portion immediately below the electrolyte solution filling port 117, with a through hole 121 that guides the electrolyte solution entering from the electrolyte solution filling port 117 toward the electrode assembly 400.

The positive electrode terminal 200 is electrically connected to the positive electrode of the electrode assembly 400 via the positive electrode current collector 140 whereas the negative electrode terminal 300 is electrically connected to the negative electrode of the electrode assembly 400 via the negative electrode current collector 150. The positive electrode terminal 200 and the negative electrode terminal 300 are metal electrode terminals configured to guide electricity stored in the electrode assembly 400 to the external space of the energy storage device 10 and guide electricity to the internal space of the energy storage device 10 so as to store the electricity in the electrode assembly 400. The positive electrode terminal 200 and the negative electrode terminal 300 are made of aluminum, aluminum alloy, or the like.

The positive electrode terminal 200 is provided with a fastening portion 210 fastening the case 100 and the positive electrode current collector 140 whereas the negative electrode terminal 300 is provided with a fastening portion 310 fastening the case 100 and the negative electrode current collector 150.

The fastening portion 210 is a member (rivet) extending downward from the positive electrode terminal 200, and is inserted and caulked to a through hole 140a provided at the positive electrode current collector 140. Specifically, the fastening portion 210 is inserted and caulked to a through hole 125a at the upper insulating member 125, the through hole 110a at the lid plate 110, a through hole 120a at the lower insulating member 120, and the through hole 140a at the positive electrode current collector 140. Accordingly, the positive electrode terminal 200 and the positive electrode current collector 140 are electrically connected to each other, and the positive electrode current collector 140 is fixed to the lid plate 110 together with the positive electrode terminal 200, the upper insulating member 125, and the lower insulating member 120.

The fastening portion 310 is a member (rivet) extending downward from the negative electrode terminal 300, and is inserted and caulked to a through hole 150a provided at the negative electrode current collector 150. Specifically, the fastening portion 310 is inserted and caulked to a through hole 135a at the upper insulating member 135, the through hole 110b at the lid plate 110, a through hole 130a at the lower insulating member 130, and the through hole 150a at the negative electrode current collector 150. Accordingly, the negative electrode terminal 300 and the negative electrode current collector 150 are electrically connect to each other, and the negative electrode current collector 150 is fixed to the lid plate 110 together with the negative electrode terminal 300, the upper insulating member 135, and the lower insulating member 130.

The fastening portion 210 can be provided integrally with the positive electrode terminal 200. Alternatively, the fastening portion 210 can be provided separately from the positive electrode terminal 200 and can be fixed to the positive electrode terminal 200 by caulking, welding, or the like. The fastening portion 310 and the negative electrode terminal 300 can be provided similarly in terms of the relation therebetween.

The positive electrode current collector 140 is a member disposed between the electrode assembly 400 and the case 100 to electrically connect the electrode assembly 400 and the positive electrode terminal 200. The positive electrode current collector 140 is made of aluminum, aluminum alloy, or the like. The positive electrode current collector 140 according to the present embodiment is electrically connected to the tab 410 for the positive electrode of the electrode assembly 400 via the positive electrode lead plate 145.

The negative electrode current collector 150 is a member disposed between the electrode assembly 400 and the case 100 to electrically connect the electrode assembly 400 and the negative electrode terminal 300. The negative electrode current collector 150 is made of copper, copper alloy, or the like. The negative electrode current collector 150 according to the present embodiment is electrically connected to the tab 420 for the negative electrode of the electrode assembly 400 via the negative electrode lead plate 155 (see Fig. 2).

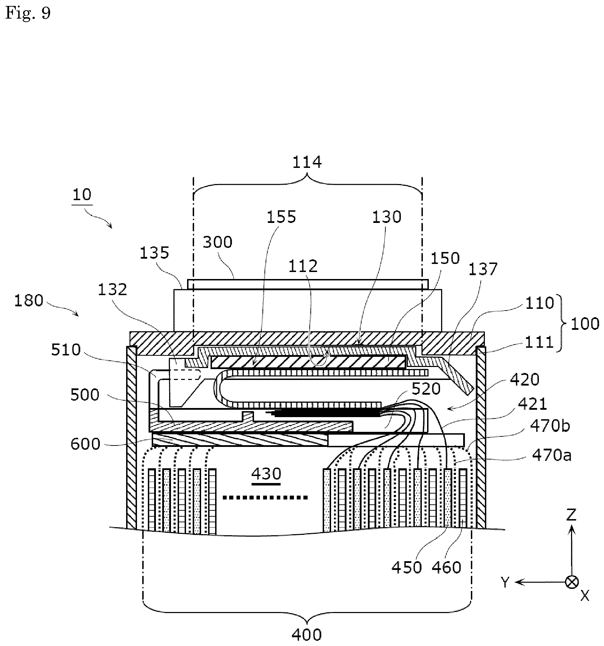

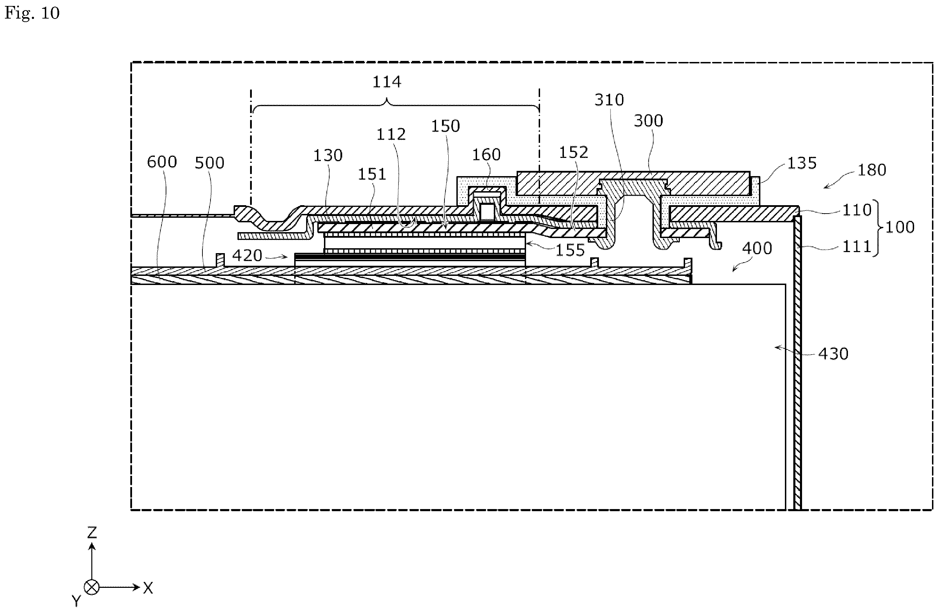

A connection portion between the current collector and the tab via the lead plate will be described in detail later with reference to Figs. 9 and 10.

The energy storage device 10 is provided, at the inner surface of the case 100, with a recess to be described later. The portion connecting the electrode assembly 400 or the conductive member connected to the electrode assembly 400 to the current collector is at least partially positioned opposite to the recess. The recess is provided at the inner surface of the case 100 toward which the tab 410 or 420 projects, in other words, the inner surface of the lid plate 110. Each of the portion connecting the positive electrode lead plate 145 and the positive electrode current collector 140 and the portion connecting the negative electrode lead plate 155 and the negative electrode current collector 150 is at least partially positioned opposite to the recess.

The positive electrode lead plate 145 and the negative electrode lead plate 155 each exemplify the conductive member mentioned above. At a portion connecting a plurality of members (e.g. the portion connecting the positive electrode lead plate 145 and the positive electrode current collector 140), these members are connected by welding such as ultrasonic welding, laser welding, or resistance welding, or mechanical joining such as mechanical caulking. Such a connection portion corresponds to part of the plurality of members and is defined as a portion connecting the members each other.

Such features will now be described below with reference to Figs. 4 to 7.

Fig. 4 is a perspective view from below (on the negative side in the Z axis direction), of a part of the lid plate structure 180. Specifically, Fig. 4 is a perspective view from below, of the negative electrode terminal 300 and of its periphery of the lid plate structure 180. The negative electrode lead plate 155 connected to the lid plate structure 180 is drawn with dotted lines in this figure. Furthermore, the negative electrode current collector 150 is hatched in this figure, for easier comprehension of the structure.

As shown in this figure, the lid plate 110 is provided, at the rear surface (the lower surface), with the negative electrode current collector 150 connected to the negative electrode lead plate 155 and the lower insulating member 130 provided to accommodate the negative electrode current collector 150. The negative electrode current collector 150 and the lower insulating member 130 are fastened by the fastening portion 310.

The structure of the positive electrode portion and the structure of the negative electrode portion are similar to each other except for the following point, and thus, the features relevant to the negative electrode will be mainly described below and the features relevant to the positive electrode will not be described repeatedly where appropriate. The positive electrode portion and the negative electrode portion are different from each other in the structure relevant to the through hole 121 guiding the electrolyte solution entering from the electrolyte solution filling port 117 toward the electrode assembly 400. Specifically, the lower insulating member 120 for the positive electrode is provided with the through hole 121, and the positive electrode current collector 140 and the positive electrode lead plate 145 are cut away at portions opposite to the through hole 121.

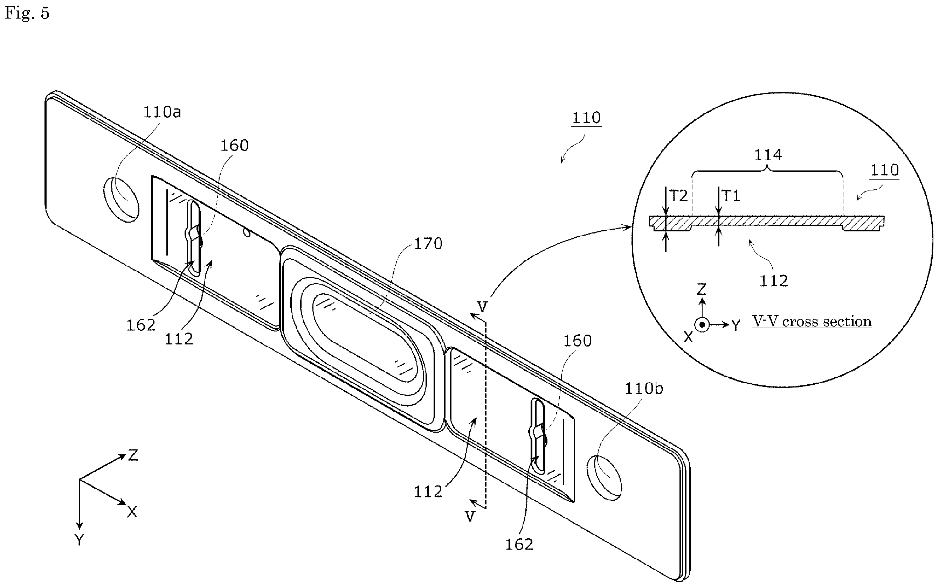

Fig. 5 is a perspective view from below (on the negative side in the Z axis direction), of the lid plate 110, accompanied by a sectional view taken along line V-V indicated in this perspective view.

As shown in this figure, the lid plate 110 is provided at the inner surface with recesses 112. Specifically, the two recesses 112 are provided correspondingly to the positive electrode portion and the negative electrode portion in the present embodiment.

The recess 112 is provided at the inner surface (the surface on the negative side in the Z axis direction) of the lid plate 110. The recess 112 has an opening and a bottom surface each in a substantially rectangular shape longer in the longitudinal direction of the lid plate 110. The recess 112 according to the present embodiment is disposed between the safety valve 170 and the through hole 110b. Provision of the recess 112 thus configured achieves increase in volume of the case 100.

As shown in the sectional view in Fig. 5, the recess 112 according to the present embodiment corresponds to a thin portion 114 of the case 100 (the lid plate 110 in the present embodiment). The thin portion 114 has a thickness T1 smaller than a thickness T2 of the remaining portion of the lid plate 110, and is provided partially at the lid plate 110 by pressing during formation of the lid plate 110. The recess 112 is formed at the inner surface of the lid plate 110 by partially thinning the lid plate 110 that has a substantially flat outer surface so as to be thinner than the remaining portion.

The recess 112 is not particularly limited in its location, but can be disposed at the portion provided with the through hole 110b of the lid plate 110. In other words, the recess 112 can be provided, in the bottom surface, with the opening of the through hole 110b. The periphery of the through hole 110b at the lid plate 110 receives a load while the fastening portion 310 fastens. When the recess 112 corresponds to the thin portion 114, the recess 112 is preferably disposed at a position displaced from the through hole 110b. Such disposition secures rigidity of the lid plate 110 in the periphery of the through hole 110b, so as to inhibit deformation and the like of the lid plate 110 and to firmly fasten the lid plate 110.

The recess 112 is not particularly limited in terms of its shape, and can have a shape not deteriorating rigidity necessary for the case 100. The opening and the bottom surface of the recess 112 are preferably secured large in order for increase in volume of the case 100.

The thin portion 114 is provided with the swelling portion 160 as a projection formed by swelling outward from the case 100 (the lid plate 110 in the present embodiment). The recess 112 is provided, at the bottom surface (the inner surface of the lid plate 110), with an engagement recess 162 formed by the swelling portion 160 swelling outward from the case 100 by pressing or the like. The swelling portion 160 according to the present embodiment is longer in the transverse direction (a Y axis direction) of the lid plate 110. Specifically, the respective ends in the longitudinal direction of the swelling portion 160 are disposed relatively close to the side surfaces of the recess 112.

The swelling portion 160 is not particularly limited in terms of its shape and location, but can be longer in the longitudinal direction (the X axis direction) of the lid plate 110 or can extend across the entire width of the recess 112 or extend outward from the recess.

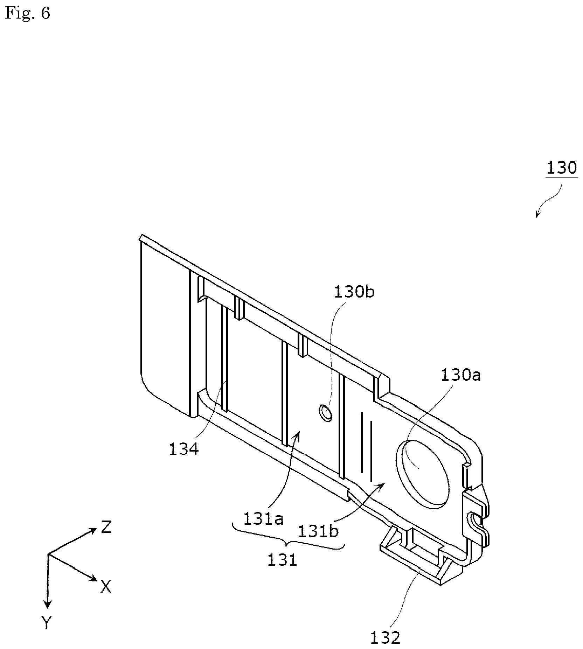

The lid plate 110 thus configured is provided, on the rear surface (the lower surface), with the lower insulating member 130 shown in Fig. 6.

Fig. 6 is a perspective view from below (on the negative side in the Z axis direction), of the lower insulating member 130.

As shown in this figure, the lower insulating member 130 has an accommodating portion 131 accommodating the negative electrode current collector 150. The accommodating portion 131 is a recess dented to have a shape slightly larger than the outer shape of the negative electrode current collector 150 so as to accommodate the negative electrode current collector 150. The accommodating portion 131 includes a first accommodating portion 131a disposed opposite to the recess 112 at the lid plate 110 and a second accommodating portion 131b disposed opposite to the periphery of the through hole 110b at the lid plate 110. The first accommodating portion 131a according to the present embodiment is disposed in contact with the inner surface of the recess 112 and the negative electrode current collector 150, and is specifically disposed between the bottom surface of the recess 112 and the negative electrode current collector 150 from the respective sides in the vertical direction. The negative electrode current collector 150 is in indirect contact with the inner surface of the recess 112 via a member other than the negative electrode current collector 150 and the case 100 (the lower insulating member 130 in the present embodiment).

The state of being "in indirect contact" is defined such that a member disposed between a plurality of members or portions is in contact with each of the members or portions. Specifically, the lower insulating member 130 according to the present embodiment is disposed between the negative electrode current collector 150 and the inner surface of the recess 112, and is also in contact with both of the negative electrode current collector 150 and the inner surface of the recess 112.

Specifically, in the lower insulating member 130, the first accommodating portion 131a is provided with the engaging portion 130b and the second accommodating portion 131b is provided with the through hole 130a, and there is provided a stepped portion between the first accommodating portion 131a and the second accommodating portion 131b. The lower insulating member 130 is provided, outside the second accommodating portion 131b, with the attachment portion 132.

For example, the first accommodating portion 131a has at least one rib 134 (three ribs 134 in the present embodiment) aligned in the X axis direction at predetermined intervals. The ribs 134 are each provided as a long projection extending in the Y axis direction across the entire width of the accommodating portion 131. The plurality of ribs 134 is disposed at the predetermined intervals in a direction crossing the longitudinal direction of the ribs 134.

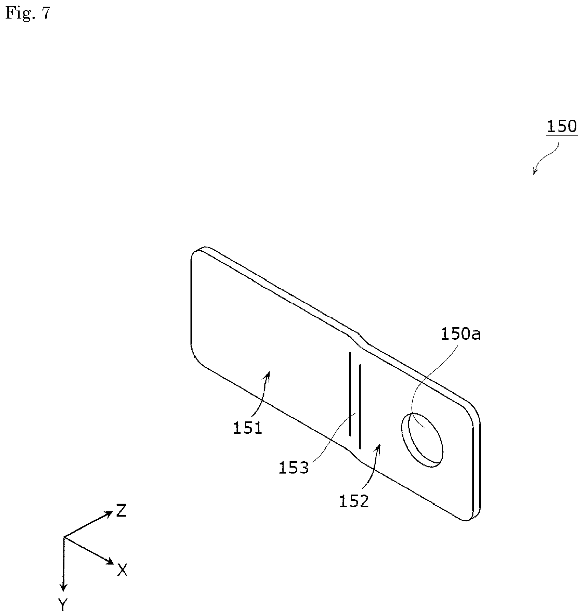

The structure of the negative electrode current collector 150 will be described next with reference to Fig. 7 together with Fig. 4.

Fig. 7 is a perspective view from below (on the negative side in the Z axis direction), of the negative electrode current collector 150.

As shown in Figs. 4 and 7, the negative electrode current collector 150 has a connection portion 151 connected with the electrode assembly 400 or the conductive member connected to the electrode assembly 400, and the connection portion 151 is at least partially disposed opposite to the recess 112 of the case 100. The connection portion 151 according to the present embodiment is connected with the negative electrode lead plate 155 connected to the electrode assembly 400, and is entirely disposed opposite to the recess 112. The connection portion 151 according to the present embodiment is in indirect contact with the inner surface of the recess 112 via the lower insulating member 130. Specifically, the connection portion 151 is part of the negative electrode current collector 150 and is connected to the negative electrode lead plate 155 by welding such as ultrasonic welding, laser welding, or resistance welding, or mechanical joining such as mechanical caulking.

Regarding disposition of the recess 112 and the connection portion 151, the connection portion 151 has only to be at least partially disposed opposite to the recess 112 (on the negative side in the Z axis direction of the recess 112). The connection portion 151 can be partially located at a position not opposite to the recess 112.

The negative electrode current collector 150 further includes a fastened portion 152 that is connected to the case 100 and is disposed opposite to a portion other than the recess 112. Specifically, the fastened portion 152 is fastened to the lid plate 110 such that the fastening portion 310 provided at the negative electrode terminal 300 is inserted to the through hole 150a and is caulked by spin caulking or the like. The fastened portion 152 is part of the negative electrode current collector 150 and is fastened to the lid plate 110.

The negative electrode current collector 150 according to the present embodiment is stepped such that the connection portion 151 is disposed inside the recess 112 relative to the fastened portion 152. That is, there is provided a stepped portion 153 between the connection portion 151 and the fastened portion 152, and the connection portion 151 is disposed farther away (on the positive side in the Z axis direction) from the electrode assembly 400 relative to the fastened portion 152. In other words, relative to the fastened portion 152, the connection portion 151 is disposed outside the lid plate 110 configuring the upper wall out of the six walls shaping the case 100 that has a substantially rectangular parallelepiped outer shape in the present embodiment. The recess 112 at the lid plate 110 corresponds to the thin portion 114 in the present embodiment. The connection portion 151 is thus disposed closer to the outer surface of the lid plate 110 relative to the fastened portion 152.

The negative electrode current collector 150 according to the present embodiment has a bent tabular outline in a substantially rectangular shape longer in the longitudinal direction (the X axis direction) of the lid plate 110. The negative electrode current collector 150 is provided, at a first end in the longitudinal direction (the end on the negative side in the X axis direction), with the connection portion 151, and is provided, at a second end (the end on the positive side in the X axis direction), with the fastened portion 152. The tab 420 is provided at a relatively flat portion (a flat portion to be described later) of the electrode assembly 400. When the lid plate 110 is disposed in the winding axis direction in the energy storage device 10 including the electrode assembly 400 of the so-called winding type, which is formed by winding the electrodes, the tab 420 is to be provided near the center in the longitudinal direction of the lid plate 110. Accordingly, the negative electrode terminal 300 disposed at the end in the longitudinal direction of the lid plate 110 and the electrode assembly 400 can be electrically connected to each other by providing the negative electrode current collector 150 longer in the longitudinal direction of the lid plate 110.

The negative electrode current collector 150 thus configured is formed by bending into a stepped shape by pressing a conductive plate member, for example.

The negative electrode current collector 150 is not particularly limited in terms of its shape, but can have a rectangular outer shape partially cut away. The negative electrode current collector 150 may not be provided as a single member, and can include the connection portion 151 and the fastened portion 152 as separate members. However, in order for decrease in resistance of the energy storage device 10, the negative electrode current collector 150 is preferred to be configured by a single member and have a tabular shape with the connection portion 151 in a large size. Furthermore, the fastened portion 152 preferably has a predetermined size in order for firm fastening with the lid plate 110.

The configuration of the electrode assembly 400, which is connected with the current collectors thus configured (the positive electrode current collector 140 and the negative electrode current collector 150), will be described next with reference to Fig. 8. The electrode assembly 400 according to the present embodiment is connected to the current collectors via the lead plates (the positive electrode lead plate 145 and the negative electrode lead plate 155) serving as conductive members.

Fig. 8 is a perspective view of a configuration of the electrode assembly 400 according to the embodiment. Fig. 8 shows a state where the wound electrode assembly 400 is partially developed and indicates a virtual winding axis W of the electrode assembly 400 with a dashed line.

The electrode assembly 400 is a power generating element configured to store electricity. As shown in Fig. 8, the electrode assembly 400 includes a positive electrode 450, a negative electrode 460, and separators 470a and 470b, which are layered alternately and wound. Specifically, the electrode assembly 400 includes the positive electrode 450, the separator 470a, the negative electrode 460, and the separator 470b, which are layered in the mentioned order and are wound so as to have an elliptical cross section.

The positive electrode 450 includes a positive electrode substrate layer of metal foil having a long belt shape and made of aluminum, aluminum alloy, or the like, and a positive active material layer provided on a surface of the positive electrode substrate layer. The positive active material layer is made of a positive active material that can be any appropriate known material if the positive active material can occlude and emit lithium ions. Examples of the positive active material include polyanion compounds such as LiMPO₄, LiMSiO₄, and LiMBOs (where M is one, two or more transition metal elements selected from Fe, Ni, Mn, Co, and the like), spinel compounds such as lithium titanate and lithium manganate, and lithium transition metal oxide such as LiMO₂ (where M is one, two or more transition metal elements selected from Fe, Ni, Mn, Co, and the like).

The negative electrode 460 includes a negative electrode substrate layer of metal foil having a long belt shape and made of copper, copper alloy, or the like, and a negative active material layer provided on a surface of the negative electrode substrate layer. The negative active material layer is made of a negative active material that can be any appropriate known material if the negative active material can occlude and emit lithium ions. Examples of the negative active material include lithium metal, lithium alloy (lithium metal containing alloy such as lithium aluminum, lithium lead, lithium tin, lithium aluminum tin, lithium gallium, and wood's alloy), lithium occludable and emittable alloy, carbon materials (e.g. graphite, hardly graphitizable carbon, easily graphitizable carbon, low-temperature baked carbon, and amorphous carbon), metal oxide, lithium metal oxide (e.g. Li₄Ti₅O₁₂), and a polyphosphoric acid compound.

The separators 470a and 470b are micro porous sheets made of resin. The separators 470a and 470b included in the energy storage device 10 can be made of any appropriate known material if the material does not adversely affect performance of the energy storage device 10.

The positive electrode 450 has a plurality of electrode projecting portions 411 projecting outward from an end in the winding axis direction of the positive electrode 450. The negative electrode 460 similarly has a plurality of electrode projecting portions 421 projecting outward from an end in the winding axis direction of the negative electrode 460. At each of the plurality of electrode projecting portions 411 and the plurality of electrode projecting portions 421, the active material is not applied and the substrate layer is exposed (active material unapplied portions).

The winding axis is a virtual center axis of the wound positive and negative electrodes 450 and 460, and agrees with a straight line parallel to the Z axis direction including the center of the electrode assembly 400 in the present embodiment.

The plurality of electrode projecting portions 411 and the plurality of electrode projecting portions 421 are disposed at the same end in the winding axis direction (the end on the positive side in the Z axis direction in Fig. 8), and are each layered at a predetermined position of the electrode assembly 400 when the positive electrode 450 and the negative electrode 460 are layered. Specifically, the plurality of electrode projecting portions 411 is layered at a predetermined circumferential position at an end in the winding axis direction when the positive electrode 450 is wound and layered. The plurality of electrode projecting portions 421 is layered at a predetermined circumferential position different from the position of the plurality of layered electrode projecting portions 411 at the end in the winding axis direction, when the negative electrode 460 is wound and layered.

The electrode assembly 400 is accordingly provided with the tab 410 formed by the plurality of layered electrode projecting portions 411 and the tab 420 formed by the plurality of layered electrode projecting portions 421. The tab 410 is gathered toward the center in the layered direction, for example, and is joined to the positive electrode lead plate 145 by ultrasonic welding or the like. The tab 420 is gathered toward the center in the layered direction, for example, and is joined to the negative electrode lead plate 155 by ultrasonic welding or the like. The positive electrode lead plate 145 joined with the tab 410 is joined to the positive electrode current collector 140 whereas the negative electrode lead plate 155 joined with the tab 420 is joined to the negative electrode current collector 150.

The tabs 410 and 420 according to the present embodiment are disposed in one of two portions of the electrode assembly 400 divided by a plane that is perpendicular to the layered direction of the electrodes (the positive electrode 450 and the negative electrode 460 in the present embodiment) and includes the winding axis W of the electrode assembly 400. Specifically, the electrode assembly 400 of the winding type according to the present embodiment includes a pair of opposed flat portions 481 and 482 and curved portions 483 and 484 connecting the pair of flat portions 481 and 482. The tabs 410 and 420 are disposed at the flat portion 482. The electrodes are layered substantially in a constant direction (the Y axis direction) at the flat portions 481 and 482. In the flat portions 481 and 482 as part of the electrode assembly 400 including the electrodes layered in the constant direction, the tabs 410 and 420 are disposed at the flat portion 482 in one of the two portions of the electrode assembly 400 divided by the plane that is perpendicular to the layered direction (the Y axis direction) of the electrodes and includes the winding axis W of the electrode assembly 400 (an XZ plane including the winding axis W).

The tab 410 for the positive electrode is formed by gathering the electrode projecting portions 411 of the number substantially equal to the number of winding the positive electrode. The tab 420 for the negative electrode is similarly formed by gathering the electrode projecting portions 421 of the number substantially equal to the number of winding the negative electrode 460.

The tabs (410 and 420) guide electricity into and out of the electrode assembly 400.

The tab 410, which is formed by layering the electrode projecting portions 411 as the portions of the exposing substrate layer, is not involved in power generation. Similarly, the tab 420, which is formed by layering the electrode projecting portions 421 as the portions of the exposing substrate layer, is not involved in power generation. In contrast, the portion of the electrode assembly 400 other than the tabs 410 and 420, which is formed by layering the portion of the substrate layer provided with the active material, is involved in power generation. The portion involved in power generation will be hereinafter referred to as the power generating portion 430.

Exemplary configurations of the connection portion between the current collector and the tab via the lead plate and its periphery will be described next with reference to Figs. 9 and 10.

Figs. 9 and 10 are outlined sectional views of the negative electrode lead plate 155 and its peripheral structure according to the embodiment. Specifically, Fig. 9 is a sectional view of part of the energy storage device 10 taken along a YZ plane including line IX-IX indicated in Fig. 3. Fig. 10 is a sectional view of part of the energy storage device 10 taken along the XZ plane including line X-X indicated in Fig. 3. These figures do not show the side spacer 700 on the positive side in the X axis direction (see Fig. 2). The electrode assembly 400 is shown in a simplified manner.

As shown in Figs. 9 and 10, the tab 420 of the electrode assembly 400 and the negative electrode current collector 150 are electrically connect to each other via the negative electrode lead plate 155 having a cross section in a U shape taken along the YZ plane. Such a connection structure is formed through the following procedure, for example.

An end (a first end) of the negative electrode lead plate 155 in a tabular shape and the tab 420 of the electrode assembly 400 are joined to each other by ultrasonic welding or the like. The end (a second end) opposite to the first end of the negative electrode lead plate 155 is joined to the connection portion 151 of the negative electrode current collector 150 assembled to the lid plate structure 180 by laser welding or the like. The negative electrode current collector 150 is assembled to the lid plate structure 180 by being preliminarily fastened to the lid plate 110 by caulking or the like.

The negative electrode lead plate 155 is subsequently deformed into the U shape by being bent at a predetermined position between the first end and the second end. As shown in Figs. 9 and 10, there is provided the connection structure between the tab 420 of the electrode assembly 400 and the negative electrode current collector 150 via the negative electrode lead plate 155 having the cross section in the U shape.

The upper spacer 500 is disposed between the electrode assembly 400 and the lid plate 110. More specifically, the upper spacer 500 partitions between the joint portion of the tab 420 to the negative electrode lead plate 155 and the power generating portion 430 of the electrode assembly 400. The tab 420 is inserted to the opening 520 provided at the upper spacer 500. As shown in Fig. 5, the buffer sheet 600 is interposed between the upper spacer 500 and the power generating portion 430 of the electrode assembly 400.

The structure around the negative electrode lead plate 155 shown in Figs. 9 and 10 is described above. The structure around the positive electrode lead plate 145 is similar to the structure around the negative electrode lead plate 155. Specifically, the tab 410 of the electrode assembly 400 and the positive electrode current collector 140 are electrically connected to each other via the positive electrode lead plate 145 having a cross section in a U shape (see Fig. 2). The upper spacer 500 partitions between the joint portion of the tab 420 to the positive electrode lead plate 145 and the power generating portion 430 of the electrode assembly 400. The tab 420 is inserted to the opening 520 provided in the upper spacer 500.

When the electrode assembly 400 is connected to the positive electrode current collector 140 and the negative electrode current collector 150 via the positive electrode lead plate 145 and the negative electrode lead plate 155 in this manner, the tabs 410 and 420 of the electrode assembly 400 can be made relatively shorter (in the winding axis direction (the Z axis direction)).

That is, the width (the length in the winding axis direction (the Z axis direction)) of the positive electrode 450 and the negative electrode 460 necessary for production of the electrode assembly 400 can be made relatively shorter. This is advantageous in terms of efficiency in production of the electrode assembly 400, for example.

Described above is the energy storage device 10 according to the present embodiment. Effects exerted by the energy storage device 10 will now be described below. Effects of the configuration of the negative electrode portion (the negative electrode current collector 150 and the like) will now be described below. These effects are similar to effects of the configuration of the positive electrode portion (the positive electrode current collector 140 and the like).

According to the present embodiment, the portion connecting the electrode assembly 400 or the conductive member to the negative electrode current collector 150 (the portion connecting the negative electrode lead plate 155 to the negative electrode current collector 150 in the present embodiment) is disposed opposite to the inner surface of the recess 112. The power generating portion 430 of the electrode assembly 400 can thus occupy close to the inner surface of the case 100.

Specifically, as shown in Figs. 9 and 10, the connection portion is disposed opposite to the inner surface of the recess 112 so as to dispose the tab 420 closer to the lid plate 110 by the depth (the size in the Z axis direction expressed by T2 - T1 (see Fig. 5)) of the recess 112, in comparison to a case where the connection portion is disposed at a position not opposite to the inner surface of the recess 112. The power generating portion 430 can thus be increased in height (in size in the Z axis direction) toward the lid plate 110 by the amount equal to the depth of the recess 112. In other words, the inner surface of the lid plate 110 and the power generating portion 430 can be disposed with a shorter distance therebetween.

Accordingly, the power generating portion 430 of the electrode assembly 400 can occupy largely in the case 100 in the present embodiment, so as to achieve increase in capacity of the energy storage device 10.

According to the present embodiment, the negative electrode current collector 150 is in indirect contact with the inner surface of the recess 112 and can thus be disposed closer to the outside of the case 100. The power generating portion 430 of the electrode assembly 400 can occupy closer to the inner surface of the case 100, so as to achieve further increase in capacity of the energy storage device 10.

The portion connecting the electrode assembly 400 or the conductive member to the negative electrode current collector 150 projects outward from the remaining portion of the electrode assembly 400. This is because the portion of the electrode assembly 400 connected to the negative electrode current collector 150 directly or via the conductive member is formed by gathering the active material unapplied portions toward the center in the layered direction, for example. In the present embodiment, it is thus necessary to secure the space to dispose the negative electrode current collector 150, the negative electrode lead plate 155, and the tab 420 being aligned. If the disposition space is secured by increasing the size of the entire case 100, the energy storage device 10 cannot be reduced in size.

The connection portion 151 of the negative electrode current collector 150 is disposed opposite to the recess 112 in the present embodiment, so as to secure the space to dispose the portion projecting outward in the case 100 and to inhibit increase in size of the entire case 100.

When the case 100 and the negative electrode current collector 150 are fastened to each other at a position overlapped with the thin portion 114 (the recess 112), the case 100 or the negative electrode current collector 150 may have backlash during or after fastening. The fastened portion 152 of the negative electrode current collector 150 is disposed opposite to a portion other than the recess 112 in the present embodiment, so as to fasten the portion other than the recess 112 and the negative electrode current collector 150. The case 100 and the negative electrode current collector 150 can thus be fastened firmly.

Particularly, the recess 112 corresponds to the thin portion 114 in the present embodiment. When the portion other than the recess 112 and the negative electrode current collector 150 are fastened to each other, the portion having relatively large rigidity of the case 100 is fastened. Such fastening is less likely to cause defects including damage to the case 100, to achieve firm fastening between the case 100 and the negative electrode current collector 150.

The connection portion 151 is disposed inside the recess 112 relative to the fastened portion 152 in the present embodiment, so that the portion projecting outward in the case 100 (the portion connecting the electrode assembly 400 or the conductive member to the negative electrode current collector 150) can be disposed in a space provided by such disposition.

Specifically, as shown in Fig. 10, the connection portion 151 is disposed inside (on the positive side in the Z axis direction) the recess 112 relative to the fastened portion 152 by a degree equivalent to the depth of the recess 112, for example. The tab 420 can thus be disposed closer to the lid plate 110 by the degree equivalent to the depth of the recess 112. The power generating portion 430 can thus be increased in height (in size in the Z axis direction) toward the lid plate 110 by the amount equal to the depth of the recess 112. In other words, the inner surface of the lid plate 110 and the power generating portion 430 can be disposed with a shorter distance therebetween.

This configuration according to the present embodiment inhibits increase in size of the entire case 100 and achieves increase in capacity of the energy storage device 10.

The difference in height between the connection portion 151 and the fastened portion 152 is not particularly limited, but is defined in accordance with the thickness of the lower insulating member 130 disposed between the lid plate 110 and the negative electrode current collector 150, the thickness of a gap provided between respective members, or the like.

The recess 112 is provided by the thin portion (the thin portion 114 of the lid plate 110 in the present embodiment) of the case 100 in the present embodiment, to inhibit increase in size of the entire case 100, in comparison to a case where the recess is provided by swelling outward the case 100. Specifically, as shown in Figs. 9 and 10, the height of the case 100 can be made substantially constant between the portion provided with the recess 112 and the remaining portion. This configuration inhibits increase in size of the entire case 100 and achieves increase in capacity of the energy storage device 10.

The thin portion 114 according to the present embodiment is provided with the swelling portion 160 so as to secure rigidity of the thin portion 114, rigidity of which is likely to decrease in comparison to the remaining portion of the case 100. Specifically, the lid plate 110 can be deformed by swelling outward in a case where internal pressure of the case 100 increases. If rigidity of the thin portion 114 is lower than that of the remaining portion, the thin portion 114 may be deformed, for example. The swelling portion 160 provided at the thin portion 114 inhibits damage when the internal pressure of the case 100 increases, so as to secure safety of the energy storage device 10. As shown in Figs. 9 and 10, the swelling portion 160 swells outward from the case 100. The swelling portion 160 swells to be away from the electrode assembly 400 and does not reduce the volume of the case 100. This configuration according to the present embodiment secures safety of the energy storage device 10 and achieves increase in capacity of the energy storage device 10.

The electrode assembly 400 has the tab 420 in the present embodiment, so as to achieve reduction in size of the portion connecting the conductive member connected to the electrode assembly 400 and the current collector (the portion connecting the negative electrode lead plate 155 and the negative electrode current collector 150 in the present embodiment). Accordingly, the recess 112 provided at the inner surface of the case 100 is not required to be made excessively large but can be made relatively small. The power generating portion 430 can occupy largely in the case 100, to achieve increase in capacity of the energy storage device.

The tab 420 according to the present embodiment is disposed in one of the two portions of the electrode assembly 400 (the one on the negative side in the Y axis direction of the two portions of the electrode assembly 400 in the present embodiment) divided by the plane (the XZ plane) including the winding axis W, and can thus be reduced in thickness. Furthermore, the recess 112 is provided at the inner surface of the case 100 (the inner surface of the lid plate 110) toward which the tab 420 projects, so that the tab 420 can be reduced in length (the size in the projecting direction). The tab 420 can occupy less in the case 100. The power generating portion 430 can thus occupy more in the case 100, to achieve increase in capacity of the energy storage device 10.

### (Other embodiments)

Described above is the energy storage device according to the embodiment of the present invention. However, the present invention is not limited to the above embodiment. Unless departing from the purpose of the present invention, any mode obtained by applying various modifications devised by those skilled in the art to the above embodiment as well as any mode obtained by combining the plurality of constituent elements described above are included in the scope of the present invention.

For example, the number of the electrode bodies 400 included in the energy storage device 10 is not limited to one but can be two or more. Provision of such a plurality of electrode bodies 400 in the energy storage device 10 reduces vacant corner spaces in the case 100 in comparison to the case where the case 100 of the same cubic content (volume) accommodates a single electrode assembly 400. Accordingly, the electrode assembly 400 can occupy more in the volume of the case 100, to achieve increase in capacity of the energy storage device 10.

The electrode assembly 400 included in the energy storage device 10 is not required to be of the winding type. The energy storage device 10 can include an electrode assembly of the layered type including layered tabular plates, for example. The energy storage device 10 can be alternatively provided with an electrode assembly that includes long belt plates bent to be projected and recessed repetitively into a bellows shape.

The positional relation between the tab 410 for the positive electrode and the tab 420 for the negative electrode is not particularly limited in the electrode assembly 400. In the electrode assembly 400 of the winding type, the tab 410 and the tab 420 can be disposed opposite to each other in the winding axis direction. In the case where the energy storage device 10 includes the electrode assembly of the layered type, the tab for the positive electrode and the tab for the negative electrode can project in different directions with respect to the layered direction.

The configurations in the energy storage device 10 can be provided in the following manners. The configurations in the negative electrode portion will now be mainly described below. These configurations are similar to the configurations in the positive electrode portion.

For example, the tab 420 can be disposed in both of the two portions of the electrode assembly 400 divided by the plane that is perpendicular to the layered direction (the Y axis direction) of the electrodes (the positive electrode 450 and the negative electrode 460) and includes the winding axis W of the electrode assembly 400 (the XZ plane including the winding axis W). The tab 420 according to the above embodiment is extracted from the power generating portion 430 with a substantially half of the thickness of the power generating portion 430. The tab 420 can be alternatively extracted with a thickness substantially equal to that of the power generating portion 430. Although increase in thickness of the tab 420 slightly degrades the effects in such a configuration, the energy storage device 10 can be increased in capacity, as in the above embodiment.

The recesses 112 at the case 100 are not particularly limited in terms of their positions. For example, the recesses 112 can be provided at the inner surface of the main body 111 of the case 100. The recess 112 for the negative electrode and the recess 112 for the positive electrode can be provided at different inner surfaces of the case 100.

Each of the recesses 112 may not correspond to the thin portion 114 of the lid plate 110. For example, the recesses 112 can be provided at the inner surface by partially swelling outward a tabular member.

The thin portion 114 of the lid plate 110 may not be provided with the swelling portion 160. For example, the thin portion 114 of the lid plate 110 can have inner and outer surfaces both of which are flat.

The thin portion 114 of the lid plate 110 can be provided, at the inner surface, with a flat projection instead of the swelling portion 160. The thin portion 114 of the lid plate 110 has only to be provided with a projection that is not limited to have a swelling shape by press molding or the like but can have a projecting shape by casting or the like. Similarly to the configuration provided with the swelling portion 160, the above configuration can secure rigidity of the thin portion 114, rigidity of which is likely to decrease in comparison to the remaining portion of the case 100.

The projection may not project outward from the case 100 but can project inward. In comparison to the case where the projection projects outward, this configuration slightly reduces capacity of the energy storage device 10 but can secure rigidity of the thin portion 114, rigidity of which is likely to decrease in comparison to the remaining portion of the case 100, similarly to this case.

The negative electrode current collector 150 may not be formed into the stepped shape and the stepped portion 153 may not be provided between the connection portion 151 and the fastened portion 152. For example, the negative electrode current collector 150 can be formed into a tabular shape and be connected to the negative electrode lead plate 155 at the position opposite to the recess 112.

The fastened portion 152 of the negative electrode current collector 150 is not particularly limited in its position, but can be disposed opposite to the recess 112. Specifically, the entire negative electrode current collector 150 can be disposed opposite to the recess 112.

The negative electrode current collector 150 can be connected to the electrode assembly 400 not via any conductive member such as the negative electrode lead plate 155 or the like. The negative electrode current collector 150 and the electrode assembly 400 can be connected by welding such as ultrasonic welding, laser welding, or resistance welding, or mechanical joining such as mechanical caulking. However, in view of production efficiency of the electrode assembly 400, the negative electrode current collector 150 is preferably connected to the electrode assembly 400 via a conductive member such as the negative electrode lead plate 155 as described above. This conductive member is not limited to the negative electrode lead plate 155 but can be any member having conductivity such as a conductive cable or a conductive film.

The negative electrode current collector 150 can be in direct contact with the bottom surface of the recess 112 not via the lower insulating member 130. The negative electrode current collector 150 can be alternatively in contact with the bottom surface of the recess 112 via a member other than the lower insulating member 130. The portion of the case 100 in direct or indirect contact with the negative electrode current collector 150 has only to be provided at the inner surface of the recess 112, and can be provided at a side surface of the recess 112.

The connection portion 151 of the negative electrode current collector 150 has only to be disposed at a position corresponding to the recess 112, and may not be in direct or indirect contact with the inner surface of the recess 112. The negative electrode current collector 150 can be disposed apart from the lower insulating member 130. However, in order for increase in size of the power generating portion 430 and increase in capacity of the energy storage device 10, the negative electrode current collector 150 is preferably in direct or indirect contact with the inner surface of the recess 112.

The tab 410 and the tab 420 have only to be spaced apart from each other by a distance securing insulation, and are not limited to be provided at the flat portion 482. The tabs 410 and 420 can be alternatively provided at the flat portion 481 or the curved portion 483 or 484.

### INDUSTRIAL APPLICABILITY

The present invention is applicable to an energy storage device mounted on an automobile that is required to have enhanced capacity.

## Claims

1. An energy storage device (10) comprising an electrode assembly (400), a current collector (140, 150), and a case (100; 110, 111) accommodating the electrode assembly (400) and the current collector (140, 150),
wherein the case (100; 110, 111) has an inner surface provided with a recess (112), and
a portion connecting the electrode assembly (400) and the current collector (140, 150) or a portion connecting a conductive member (145, 155) connected to the electrode assembly (400) and the current collector (140, 150) is at least partially disposed opposite to the recess (112) via a lower insulating member (130),
wherein the electrode assembly (400) includes a main body portion (430) and a tab (410, 420) projecting from the main body portion (430), and
the tab (410, 420) is connected to the current collector (140, 150) or the conductive member (145, 155), **characterised in that** the recess (112) is provided at the inner surface of the case (100; 110, 111) towards which the tab (410, 420) projects.

2. The energy storage device according to claim 1, wherein the current collector (140, 150) is in direct contact with an inner surface of the recess (112), or is in indirect contact with the inner surface of the recess (112) via a member different from the current collector (140, 150) and the case (100; 110, 111).

3. The energy storage device according to claim 1 or 2, wherein the current collector (140. 150) has a connection portion (151) connected to the electrode assembly (400) or a connection portion (151) connected to the conductive member, and a fastened portion (152) fastened to the case (100; 110, 111),
the connection portion is disposed inside the recess (112), and
the fastened portion (152) is disposed opposite to a portion other than the recess (112) of the case (100; 110, 111).

4. The energy storage device according to claim 3, wherein the current collector (140, 150) is formed into a stepped shape such that the connection portion (151) is disposed inside the recess (112) relative to the fastened portion.

5. The energy storage device according to any one of claims 1 to 4, wherein the recess (112) corresponds to a thin portion of the case (100; 110, 111), which has a thickness smaller than the remaining portion of the case (100; 110, 111).

6. The energy storage device according to claim 5, wherein the thin portion is provided with a projection (16).

7. The energy storage device according to claim 1, wherein the electrode assembly (400) includes electrodes that are wound to be layered,
the tab (410, 420) is disposed in one of two portions of the electrode assembly divided by a plane that is perpendicular to a layered direction of the electrodes and includes a winding axis of the electrode assembly (400).

## Patentansprüche

1. Energiespeichervorrichtung (10), umfassend eine Elektrodenanordnung (400), einen Stromkollektor (140, 150) und ein Gehäuse (100; 110, 111), das die Elektrodenanordnung (400) und den Stromkollektor (140, 150) aufnimmt,
wobei das Gehäuse (100; 110, 111) eine mit einer Aussparung (112) versehene Innenfläche aufweist, und
wobei ein Abschnitt, der die Elektrodenanordnung (400) und den Stromkollektor (140, 150) verbindet, oder ein Abschnitt, der ein leitfähiges Element (145, 155), das mit der Elektrodenanordnung (400) verbunden ist, und den Stromkollektor (140, 150) verbindet, mindestens teilweise gegenüber der Aussparung (112) mit einem dazwischenliegenden unteren Isolierelement (130) angeordnet ist,
wobei die Elektrodenanordnung (400) einen Hauptkörperabschnitt (430) und eine von dem Hauptkörperabschnitt (430) abstehende Nase (410, 420) aufweist, und
wobei die Nase (410, 420) mit dem Stromkollektor (140, 150) oder dem leitfähigen Teil (145, 155) verbunden ist,
**dadurch gekennzeichnet, dass** die Aussparung (112) an der Innenseite des Gehäuses (100; 110, 111) ausgebildet ist, zu der die Nase (410, 420) hin ragt.

2. Energiespeichervorrichtung nach Anspruch 1, wobei der Stromkollektor (140, 150) mit einer Innenfläche der Aussparung (112) in direktem Kontakt steht oder mit der Innenfläche der Aussparung (112) über ein dazwischen befindliches Element, das weder der Stromkollektor (140, 150) noch das Gehäuse (100; 110, 111) ist, in indirektem Kontakt steht.

3. Energiespeichervorrichtung nach Anspruch 1 oder 2, wobei der Stromkollektor (140, 150) einen Verbindungsabschnitt (151) aufweist, der mit der Elektrodenanordnung (400) verbunden ist, oder einen Verbindungsabschnitt (151) aufweist, der mit dem leitfähigen Element verbunden ist, und einen befestigten Abschnitt (152) aufweist, der an dem Gehäuse (100; 110, 111) befestigt ist,
wobei der Verbindungsabschnitt innerhalb der Aussparung (112) angeordnet ist und der befestigte Abschnitt (152) gegenüber einem anderen Abschnitt als der Aussparung (112) des Gehäuses (100; 110, 111) angeordnet ist.

4. Energiespeichervorrichtung nach Anspruch 3, wobei der Stromkollektor (140, 150) so zu einer Stufenform ausgebildet ist, dass der Verbindungsabschnitt (151) innerhalb der Aussparung (112) relativ zum befestigten Abschnitt angeordnet ist.

5. Energiespeichervorrichtung nach einem der Ansprüche 1 bis 4, wobei die Aussparung (112) einem dünnen Abschnitt des Gehäuses (100; 110, 111) entspricht, dessen Dicke geringer ist als der übrige Abschnitt des Gehäuses (100; 110, 111).

6. Energiespeichervorrichtung nach Anspruch 5, wobei der dünne Abschnitt mit einem Vorsprung (16) versehen ist.

7. Energiespeichervorrichtung nach Anspruch 1, wobei die Elektrodenanordnung (400) Elektroden umfasst, die zu Schichten gewickelt sind,
wobei die Nase (410, 420) in einem von zwei Abschnitten der Elektrodenanordnung angeordnet ist, der durch eine Ebene geteilt wird, die senkrecht zu einer Schichtungsrichtung der Elektroden verläuft und eine Wickelachse der Elektrodenanordnung (400) umfasst.

## Revendications

1. Dispositif de stockage d'énergie (10) comprenant un ensemble électrodes (400), un collecteur de courant (140, 150) et un boîtier (100 ; 110, 111) recevant l'ensemble électrodes (400) et le collecteur de courant (140, 150),
dans lequel le boîtier (100 ; 110, 111) a une surface intérieure pourvue d'un évidement (112), et
une partie reliant l'ensemble électrodes (400) et le collecteur de courant (140, 150) ou une partie reliant un élément conducteur (145, 155) relié à l'ensemble électrodes (400) et le collecteur de courant (140, 150) est au moins partiellement disposée en face de l'évidement (112) par l'intermédiaire d'un élément isolant inférieur (130),
dans lequel l'ensemble électrodes (400) inclut une partie corps principal (430) et une languette (410, 420) faisant saillie de la partie corps principal (430), et
la languette (410, 420) est reliée au collecteur de courant (140, 150) ou à l'élément conducteur (145, 155),
**caractérisé en ce que** l'évidement (112) est prévu sur la surface intérieure du boîtier (100 ; 110, 111) vers laquelle la languette (410, 420) fait saillie.

2. Dispositif de stockage d'énergie selon la revendication 1, dans lequel le collecteur de courant (140, 150) est en contact direct avec une surface intérieure de l'évidement (112) ou est en contact indirect avec la surface intérieure de l'évidement (112) par l'intermédiaire d'un élément différent du collecteur de courant (140, 150) et du boîtier (100 ; 110, 111).

3. Dispositif de stockage d'énergie selon la revendication 1 ou 2, dans lequel le collecteur de courant (140, 150) présente une partie de connexion (151) reliée à l'ensemble électrodes (400) ou une partie de connexion (151) reliée à l'élément conducteur, et une partie fixée (152) fixée au boîtier (100 ; 110, 111),
la partie de connexion est disposée à l'intérieur de l'évidement (112) et
la partie fixée (152) est disposée en face d'une partie autre que l'évidement (112) du boîtier (100 ; 110, 111).

4. Dispositif de stockage d'énergie selon la revendication 3, dans lequel le collecteur de courant (140, 150) est réalisé avec une forme étagée de telle sorte que la partie de connexion (151) est disposée à l'intérieur de l'évidement (112) par rapport à la partie fixée.

5. Dispositif de stockage d'énergie selon l'une quelconque des revendications 1 à 4, dans lequel l'évidement (112) correspond à une partie mince du boîtier (100 ; 110, 111) qui a une épaisseur inférieure à la partie restante du boîtier (100 ; 110, 111).

6. Dispositif de stockage d'énergie selon la revendication 5, dans lequel la partie mince est pourvue d'une saillie (16).

7. Dispositif de stockage d'énergie selon la revendication 1, dans lequel l'ensemble électrodes (400) inclut des électrodes qui sont enroulées de façon à former des couches, la languette (410, 420) est disposée dans l'une de deux parties de l'ensemble électrodes divisé par un plan qui est perpendiculaire à une direction des couches des électrodes et inclut un axe d'enroulement de l'ensemble électrodes (400) .
